# EUROPÄISCHE PATENTSCHRIFT

(11) **EP 1 187 732 B1**
(45) Veröffentlichungstag und Bekanntmachung des Hinweises auf die Patenterteilung: **14.06.2006**
(21) Anmeldenummer: 00935154.5
(22) Anmeldetag: 31.05.2000
(51) Int. Cl.: B60F 3/00

(54) **AMPHIBIENFAHRZEUG**
AMPHIBIOUS VEHICLE
VEHICULE AMPHIBIE

(30) Priorität: 09.06.1999 DE 19926145
(43) Veröffentlichungstag der Anmeldung: 20.03.2002
(73) Patentinhaber: Volkswagen Aktiengesellschaft, 38436 Wolfsburg (DE)
(72) Erfinder: LENT-PHILLIPS, Hans-Martin, D-38518 Gifhorn (DE); HACKENBERG, Ulrich, D-85139 Wettstetten (DE)
(86) Internationale Anmeldenummer: PCT/EP2000/004980
(87) Internationale Veröffentlichungsnummer: WO 2000/076794

(56) Entgegenhaltungen:
- CH-A- 410 660
- FR-A- 514 690
- FR-A- 2 411 095
- US-A- 4 744 324

## Beschreibung

Die Erfindung betrifft gattungsgemäßes ein Amphibienfahrzeug, wie z.B aus US-A-4 74432 bekannt ist.

Kraftfahrzeuge der verschiedensten Art finden verstärkt Einsatz im Freizeitbereich für Vergnügungszwecke. Beispiele hierfür sind Schneemobile, Jet-Skis oder auch Strand-Chopper, die mit drei oder vier Ballonreifen ausgebildet sind und sich daher auch im Sand fortbewegen können. Nachteilig an den bekannten Fahrzeugen ist, daß diese jeweils nur in einer Umgebung einsetzbar sind oder aber nicht für Vergnügungszwecke geeignet sind. Beispiele hierfür sind Schneeraupen-Fahrzeuge oder Amphibienfahrzeuge. Die bekannten Amphibienfahrzeuge für militärische oder zivile Zwecke sind relativ groß und unförmig. Der Grund hierfür liegt hauptsächlich darin, daß die Kraftfahrzeugunterseite einem Bootsrumpf nachgebildet ist, um die Schwimmfähigkeit zu gewährleisten. In anderen Ausführungsformen wird versucht, herkömmliche Kraftfahrzeuge durch Modifikationen wie Schwimmausleger im Auftrieb zu verbessern, wobei die damit erzielbaren Wassergeschwindigkeiten unbefriedigend bleiben.

Aus der DE 35 22 041 A1 ist ein allradgetriebenes Amphibienfahrzeug mit hoher Wasserfahrt-Geschwindigkeit bekannt, bei dem durch Anordnung eines Schaufel- und Umlenkblechsystems an allen vier Rädern bei der Wasserfahrt starke Auftriebskräfte erzeugt werden, die den Fahzeugkörper aus dem Wasser heben. Nur die Räder mit den Schaufeln bleiben mit dem Wasser in Berührung. Da hierdurch der sonst bei Amphibienfahrzeugen formbedingt besonders hohe Widerstand im Wasser fortfällt, können die ebenfalls durch das Schaufelsystem erzeugten Vortriebskräfte dem Fahrzeug die geforderte hohe Wasserfahrt-Geschwindigkeit verleihen. Die Schaufel des Systems mit ihren Halterungen sind lösbar an den Rädern angeordnet und müssen bei Landfahrt demontiert bzw. vor dem Schwimmbetrieb montiert werden. Alternativ wird vorgeschlagen, Räder und Schaufelsystem permanent miteinander zu verbinden. Nachteilig an den bekannten Amphibienfahrzeugen ist je nach Ausführungsform entweder die umständliche Montage bzw. Demontage oder die hohen Kosten für eine automatische Ein- und Ausschubvorrichtung für das Schaufelsystem.

Aus der DE 38 32 559 C1 ist ein amphibisches Kraftfahrzeug mit einem Motor bekannt, der einen Wasserantrieb direkt und einen Landantrieb über ein Getriebe antreibt, wobei in den Antriebsstrang des Landantriebs eine Kupplung eingesetzt ist, deren Kupplungskraft während des Anladens und der Wasserfahrt entsprechend der Differenz zwischen Ist- und Soll-Drehzahl des Landantriebs derart veränderbar ist, daß die Antriebsdrehzahl bis auf die Solldrehzahl geregelt regulierbar ist. Dadurch kann der Antriebsmotor des amphibischen Kraftfahrzeuges auch beim Anlanden mit voller Drehzahl gefahren werden, so daß der Wasserantrieb, der als Schraube oder Jet ausgebildet sein kann, den maximalen Schub zur Unterstützung des Anladens und der Wasserausfahrt abgibt.

Aus der DE 39 16 200 A1 ist eine Antriebsanlage für ein Amphibienfahrzeug bekannt, bei welcher nur ein einziger Antriebsmotor erforderlich ist und trotzdem der Fahrantrieb und der Schwimmantrieb wahlweise voneinander unabhängig oder gleichzeitig betrieben werden können. Dadurch ist es möglich, daß bei gleichzeitigem Betrieb von Fahrantrieb und Schwimmantrieb mit nur einem einzigen Motor, und vorzugsweise bei konstanter Drehzahl des Motors, der Fahrantriebsstrang und der Schwimmantriebsstrang bezüglich Drehzahl und Leistung unabhängig voneinander steuerbar oder regelbar sind. Dies ist insbesondere beim Anlanden (Übergang von Wasser auf Land) und Ablanden (Übergang vom Land in das Wasser) von großem Vorteil, damit z.B. die Räder des Amphibienfahrzeuges sich nicht in weichen Ufergrund eingraben. Für den Fahrantrieb kann ein einziger Fahrantriebsstrang, und für den Schwimmantrieb kann ein einziger Schwimmantriebsstrang genügen. Wenn das Amphibienfahrzeug mehrere Schwimmvortriebseinrichtungen hat, beispielsweise mehrere Propeller oder mehrere Hydrojets, dann ist es von Vorteil, wenn jede dieser Schwimmvortriebseinrichtungen einen eigenen Schimmantriebsstrang hat, welche wahlweise gemeinsam oder unabhängig voneinander steuerbar oder regelbar sind.

Der Erfindung liegt daher das technische Problem zugrunde, ein geländegängiges Amphibienfahrzeug insbesondere für Freizeitzwecke zu schaffen, das mit minimalem Aufwand vom Fahr- zum Schwimmbetrieb umschaltbar ist, in beiden Betriebsarten ausreichend große Geschwindigkeiten und eine offene Sitzposition des Kraftfahrzeugführers erlaubt.

Die Lösung des technischen Problems ergibt sich durch die Merkmale des Patentanspruchs 1. Weitere vorteilhafte Ausgestaltungen der Erfindung ergeben sich aus den Unteransprüchen.

Durch die mittige Anordnung des Antriebsmotors kann der Schwerpunkt des Amphibienfahrzeuges derart in Richtung des Auftriebspunktes verschoben werden, daß sich der Fahrzeugschwerpunkt im bekannten Zustand oberhalb des Auftriebspunktes befindet, so daß im wesentlichen keine Drehmomente auftreten. Dadurch erhält das Amphibienfahrzeug trotz der offenen Sitzanordnung eine stabile Wasserlage, die überhaupt erst einen sinnvollen Wasserbetrieb ermöglicht. Durch den Allradantrieb ist das Amphibienfahrzeug voll geländegängig, wobei der als Jet-Antrieb ausgebildete Schwimmantrieb einerseits ausreichende Wassergeschwindigkeiten gewährleistet und zum anderen, im Gegensatz zu einer Schraube, im Fahrbetrieb nicht so leicht beschädigt werden kann sowie kein Verletzungsrisiko für Dritte darstellt.

In einer weiteren bevorzugten Ausführungsform sind die Reifen des Amphibienfahrzeuges als Ballonreifen ausgebildet, die einerseits dem Fahrbetrieb im Sand zu Gute kommen und zum anderen gleichzeitig im Schwimmbetrieb als Auftriebskörper wirken, wobei für den Fahrbetrieb die hinteren Ballonreifen vorzugsweise etwas größer als die vorderen Ballonreifen ausgebildet sind.

Zur Verbesserung des Auftriebs können zusätzlich im vorderen und/oder hinteren Bereich des Amphibienfahrzeuges zusätzliche diskrete Auftriebskörper, die vorzugsweise als Lufttanks ausgebildet sind, vorgesehen sein. Mit diesen diskreten Auftriebskörpers, die demontierbar ausgebildet sein können, läßt sich darüber hinaus der Auftriebspunkt besser einstellen.

Die Erfindung wird nachfolgend anhand eines bevorzugten Ausführungsbeispiels näher erläutert. Die Fig. zeigen:
- Fig. 1: eine schematische Seitenansicht eines Amphibienfahrzeuges und
- Fig. 2: eine schematische Unteransicht des Amphibienfahrzeuges.

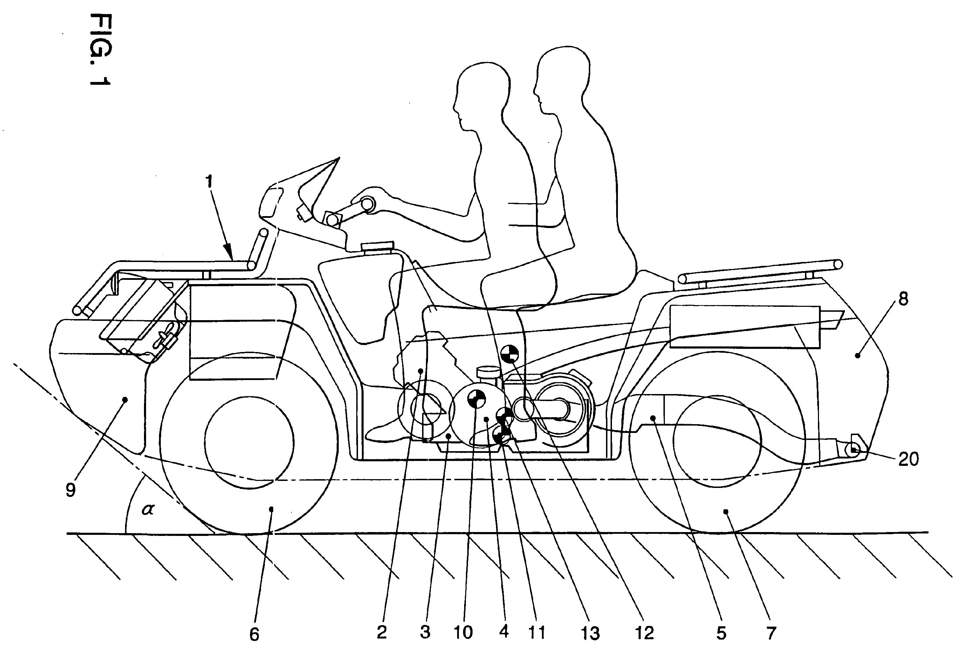

In der Fig. 1 ist ein Amphibienfahrzeug 1 mit einer offenen Sitzanordnung für zwei Personen dargestellt. Das Amphibienfahrzeug 1 umfaßt einen Antriebsmotor 2, ein Motorgetriebe 3, eine erste Kupplung 4 zum Antreiben eines Jet-Antriebs 5 und zwei weiteren Kupplungen zum unabhängigen Antreiben der Vorderräder 6 und der Hinterräder 7. Des weiteren umfaßt das Amphibienfahrzeug 1 einen im hinteren Bereich des Amphibienfahrzeuges 1 angeordneten Lufttank 8 und einen im vorderen Bereich angeordneten Lufttank 9. Der Antriebsmotor 2 ist mittig zwischen der Vorderachse und der Hinterachse unterhalb des Fahrers angeordnet. Dadurch läßt sich der Schwerpunkt 10 bei Fahrzeugleergewicht vor die Sitzposition des Fahrers verschieben. Der Auftrieb, der im wesentlichen durch die mit Ballonreifen ausgebildeten Vorderräder 6 und Hinterräder 7 sowie die beiden Lufttanks 8, 9 erzeugt wird, läßt sich durch deren Dimensionierung derart einstellen, daß der Auftriebspunkt 11 bei Fahrzeugleergewicht unter der Sitzposition des Fahrers liegt. Durch das zusätzliche Gewicht der beiden Fahrzeuginsassen, die relativ hoch sitzen, verschiebt sich der Schwerpunkt 12 bei Fahrzeuggesamtgewicht einerseits nach oben und zum anderen unterhalb der der Sitzposition des Fahrers. Da der Auftriebspunkt 13 bei Fahrzeuggesamtgewicht sich nur nach oben verschiebt, sind Schwerpunkt 12 und Auftriebspunkt 13 auf einer Wirklinie, so daß kein resultierendes Drehmoment existiert und das Amphibienfahrzeug 1 eine stabile Schwimmlage einnimmt. Zur Verbesserung der Strömungsdynamik ist der Lufttank 9 mit einer Abschrägung ausgebildet, deren Scheitelpunkt zur Wasseroberfläche einen Winkel α von vorzugsweise 40° einschließt.

Eine weitere Möglichkeit zur Verbesserung des Auftriebs besteht darin, die Achsbreite des Amphibienfahrzeuges 1 im Vergleich zu herkömmlichen off-road-Fahrzeugen, wie beispielsweise den Strand-Choppern, zu vergrößern.

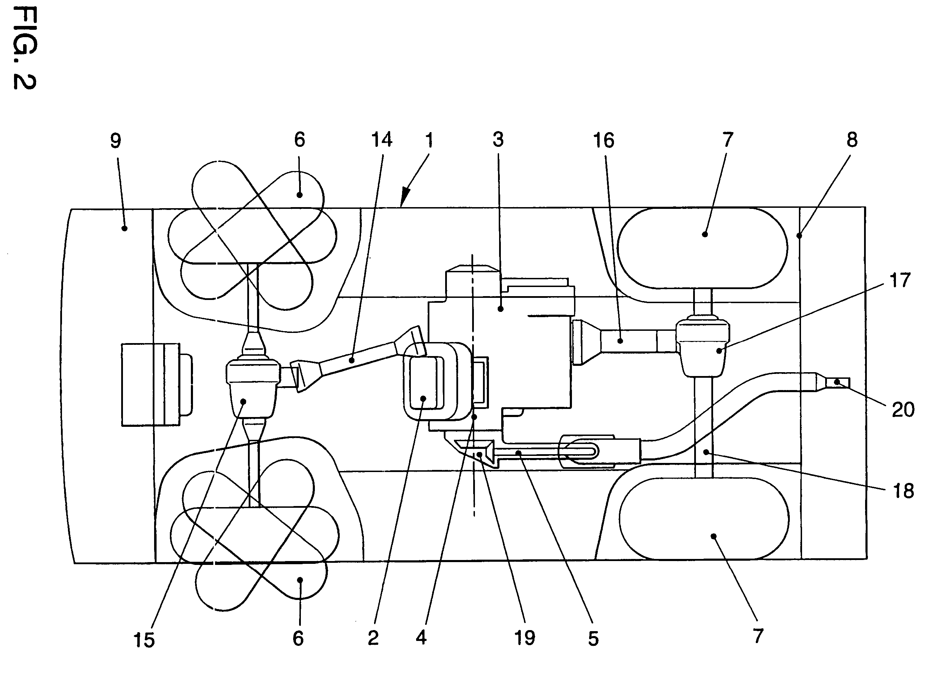

Aufbau und Wirkungsweise der Antriebsstränge wird nun nachfolgend anhand der schematischen Unteransicht gemäß Fig. 2 erläutert. Die Antriebsstränge umfassen den mittig angeordneten Antriebsmotor 2 und das Motorgetriebe 3, die sowohl dem Fahrantrieb als auch dem Jet-Antrieb 5 zugeordnet sind. Das Motorgetriebe 3 ist über eine Kardanwelle 14 mit einem Vorderachsgetriebe 15 verbunden, über das die Vorderräder 6 antreibbar sind. Des weiteren ist das Motorgetriebe 3 über eine Abtriebswelle 16 mit einem Hinterachsgetriebe 17 verbunden, über das mittels einer starren Hinterachse 18 die beiden Hinterräder 7 antreibbar sind. Zum Abtrennen des Fahrstrangs sind mindestens zwei Kupplungen vorgesehen, die entweder am Motorgetriebe 3 oder aber im Vorderachsgetriebe 15 bzw. Hinterachsgetriebe 16 angeordnet sind. Die beiden Kupplungen sind voneinander unabhängig steuerbar. Über die Kupplung 4 kann das Motorgetriebe mit einem Kegelradgetriebe 19 des Jet-Antriebs 5 in Eingriff gebracht werden, wobei die Kupplung 4 unabhängig steuerbar ist.

Im Fahrbetrieb ist die Kupplung 4 offen, und die Vorderräder 6 und/oder Hinterräder 7 werden durch den Antriebsmotor 2 und das Motorgetriebe 3 angetrieben. Im Schwimmbetrieb wird die Kupplung 4 geschlossen und durch Eingriff des Kegelradgetriebes 19 eine Schraube in Rotation versetzt, die über eine Bodenöffnung Wasser ansaugt und in Richtung der Jet-Düse 20 preßt. Der ausgestoßene Wasserstrahl bewirkt dann einen Vorwärtsimpuls auf das Amphibienfahrzeug 1, aufgrund dessen das Amphibienfahrzeug 1 angetrieben wird. Der Fahrantriebsstrang kann im Schwimmbetrieb ausgekuppelt werden oder aber zur Unterstützung des Auftriebes genutzt werden. Hierzu wird der Rückwärtsgang eingelegt, so daß die Vorderräder 6 und die Hinterräder 7 entgegen der Fahrtrichtung rotieren. Über die voneinander unabhängigen Kupplungen können beispielsweise auch nur die Hinterräder 7 angetrieben werden. Die Lenkung im Schwimmbetrieb erfolgt primär über die schwenkbare Jet-Düse 20, wobei die Lenkung der Vorderräder 6 gegebenenfalls zur Unterstützung herangezogen werden kann. Beim Anlanden wird dann der Fahrantriebsstrang im Vorwärtsgang zurückgeschaltet, wobei das Antriebsmoment derart gesteuert oder geregelt wird, daß sich die Räder nicht in den Untergrund eingraben. Hier kann beispielsweise eine Anordnung gemäß DE 39 16 200 A1 zur Anwendung kommen.

### BEZUGSZEICHENLISTE

- 1.: Amphibienfahrzeug
- 2.: Antriebsmotor
- 3.: Motorgetriebe
- 4.: Kupplung
- 5.: Jet-Antrieb
- 6.: Vorderräder
- 7.: Hinterräder
- 8.: Lufttank
- 9.: Lufttank
- 10.: Schwerpunkt bei Fahrzeugleergewicht
- 11.: Auftriebspunkt bei Fahrzeugleergewicht
- 12.: Schwerpunkt bei Fahrzeuggesamtgewicht
- 13.: Auftriebspunkt bei Fahrzeuggesamtgewicht
- 14.: Kardanwelle
- 15.: Vorderachsgetriebe
- 16.: Abtriebswelle
- 17.: Hinterachsgetriebe
- 18.: Hinterachse
- 19.: Kegelradgetriebe
- 20.: Jet-Düse

## Patentansprüche

1. Amphibienfahrzeug (1), mit einer offenen Sitzanordnung, umfassend einen Antriebsmotor (2), wobei der Antriebsmotor (2) im wesentlichen mittig zwischen den Achsen des Fahrantriebs unterhalb der Sitzanordnung angeordnet ist, **dadurch gekennzeichnet, daß** der Antriebsmotor zum wechselseitigen oder gleichzeitigen Antreiben eines allradgetriebenen Fahrantriebs und eines als Jet-Antrieb (5) ausgebildeten Schwimm-Antriebs mittels mindestens zweier voneinander unabhängiger Kupplungen ausgebildet ist.

2. Amphibienfahrzeug nach Anspruch 1, **dadurch gekennzeichnet, daß** die Reifen der Vorderräder (6) und der Hinterräder (7) als Ballonreifen ausgebildet sind.

3. Amphibienfahrzeug nach Anspruch 2, **dadurch gekennzeichnet, daß** die hinteren Ballonreifen ein größeres Volumen als die vorderen Ballonreifen aufweisen.

4. Amphibienfahrzeug nach einem der vorangegangenen Ansprüche, **dadurch gekennzeichnet, daß** im vorderen und/oder hinteren Bereich Auftriebskörper angeordnet sind.

5. Amphibienfahrzeug nach Anspruch 4, **dadurch gekennzeichnet, daß** die Auftriebskörper als Lufttanks (8,9) ausgebildet sind.

6. Amphibienfahrzeug nach Anspruch 4 oder 5, **dadurch gekennzeichnet, daß** die vorderen Auftriebskörper einen größeren Auftrieb als die hinteren Auftriebskörper erzeugen.

7. Amphibienfahrzeug nach einem der vorangegangenen Ansprüche, **dadurch gekennzeichnet, daß** die Sitzanordnung als Zweisitzer ausgebildet ist.

8. Verfahren zum Betreiben eines Amphibienfahrzeuges nach einem der vorangegangenen Ansprüche, **dadurch gekennzeichnet, daß** im Schwimmbetrieb der Fahrantrieb zugeschaltet wird und die Vorderräder (6) und/oder die Hinterräder (7) entgegen der Fahrtrichtung angetrieben werden.

9. Verfahren zum Betreiben eines Amphibienfahrzeuges nach einem der vorangegangenen Ansprüche, **dadurch gekennzeichnet, daß** im Schwimmbetrieb die Steuerung über eine schwenkbare Jet-Düse durch die Lenkung der Vorderräder unterstützbar ist.

## Claims

1. Amphibious vehicle (1), having an open seat arrangement, comprising a drive motor (2), the drive motor (2) being disposed essentially centrally between the axles of the travelling gear beneath the seat arrangement, **characterized in that** the drive motor is configured for the alternate or simultaneous driving of an all-wheel driven travelling gear and of a floating drive configured as a jet drive (5) by means of at least two mutually independent clutches.

2. Amphibious vehicle according to Claim 1, **characterized in that** the tyres of the front wheels (6) and of the rear wheels (7) are configured as balloon tyres.

3. Amphibious vehicle according to Claim 2, **characterized in that** the rear balloon tyres have a larger volume than the front balloon tyres.

4. Amphibious vehicle according to one of the preceding claims, **characterized in that** in the front and/or rear region floats are provided.

5. Amphibious vehicle according to Claim 4, **characterized in that** the floats are configured as air tanks (8, 9).

6. Amphibious vehicle according to Claim 4 or 5, **characterized in that** the front floats generate greater buoyancy than the rear floats.

7. Amphibious vehicle according to one of the preceding claims, **characterized in that** the seat arrangement is configured as a two-seater.

8. Method for operating an amphibious vehicle according to one of the preceding claims, **characterized in that** in floating operation the travelling gear is switched on and the front-wheels (6) and/or the rear wheels (7) are driven counter to the direction of travel.

9. Method for operating an amphibious vehicle according to one of the preceding claims, **characterized in that** in floating operation the steering by means of a pivotable jet nozzle can be supported by the steering gear of the front wheels.

## Revendications

1. Véhicule amphibie (1), avec un système de siège ouvert, comprenant un moteur d'entraînement (2), le moteur d'entraînement (2) étant disposé sensiblement au centre entre les axes de l'entraînement de conduite sous le système de siège, **caractérisé en ce que** le moteur d'entraînement est réalisé pour l'entraînement alternatif ou simultané d'un entraînement de conduite à toutes roues motrices et d'un entraînement flottant réalisé sous forme d'entraînement par propulsion (5) au moyen d'au moins deux accouplements indépendants l'un de l'autre.

2. Véhicule amphibie selon la revendication 1, **caractérisé en ce que** les pneus des roues avant (6) et des roues arrière (7) sont réalisés sous la forme de pneus ballons.

3. Véhicule amphibie selon la revendication 2, **caractérisé en ce que** les pneus ballons arrière présentent un plus grarid volume que les pneus ballons avant.

4. Véhicule amphibie selon l'une quelconque des revendications précédentes, **caractérisé en ce que** dans la région avant et/ou arrière, on prévoit des corps de flottaison.

5. Véhicule amphibie selon la revendication 4, **caractérisé en ce que** les corps de flottaison sont réalisés sous forme de réservoirs d'air (8, 9).

6. Véhicule amphibie selon la revendication 4 ou 5, **caractérisé en ce que** les corps de flottaison avant produisent une flottabilité supérieure aux corps de flottaison arrière.

7. Véhicule amphibie selon l'une quelconque des revendications précédentes, **caractérisé en ce que** le système de siège est réalisé sous la forme d'un siège pour deux personnes.

8. Procédé pour faire fonctionner un véhicule amphibie selon l'une quelconque des revendications précédentes, **caractérisé en ce que** le mode flottant de l'entraînement de conduite est enclenché et les roues avant (6) et/ou les roues arrière (7) sont entrainées dans le sens inverse de la direction d'avance.

9. Procédé pour faire fonctionner un véhicule amphibie selon l'une quelconque des revendications précédentes, **caractérisé en ce qu'**en mode flottant, la commande peut être supportée par le biais d'une buse à jet pivotante par la direction des roues avant.
